Europäisches Patentamt
European Patent Office
Office européen des brevets

(11) Publication number: **0 141 346**
**B1**

# EUROPEAN PATENT SPECIFICATION

(45) Date of publication of patent specification: 21.03.90

(51) Int. Cl.$^5$: **C 08 L 79/08**

(21) Application number: 84112583.4

(22) Date of filing: 18.10.84

**(54) Blends of polyetherimide and ethylene vinyl acetate copolymers.**

(30) Priority: 24.10.83 US 544967

(43) Date of publication of application:
15.05.85 Bulletin 85/20

(45) Publication of the grant of the patent:
21.03.90 Bulletin 90/12

(84) Designated Contracting States:
DE FR GB IT NL

(56) References cited:

No relevant documents have been disclosed

(73) Proprietor: GENERAL ELECTRIC COMPANY
1 River Road
Schenectady New York 12305 (US)

(72) Inventor: Allen, Deborah Lynne
525 Windsor Road
Dalton Massachusetts 01226 (US)

(74) Representative: Schüler, Horst, Dr. et al
Kaiserstrasse 69
D-6000 Frankfurt/Main 1 (DE)

EP 0 141 346 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention is concerned with a new class of polyetherimide-ethylene vinyl acetate copolymer blends. These blends exhibit higher impact strengths than those associated with the polyetherimide component of the blends.

The novel polyetherimide-ethylene vinyl acetate copolymers comprise (A) a polyetherimide of the formula

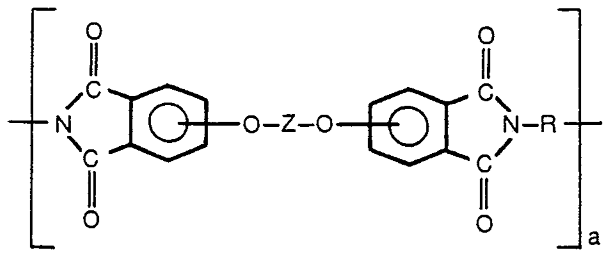

wherein a represents a whole number in excess of 1 (e.g. from 10 to about 10,000 or more), the —O—Z—O— group is in the 3,3'-, 3,4'-, 4,3'-, or 4,4'- positions, and Z is selected from (1).

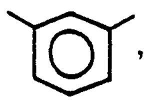, 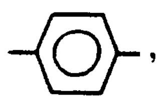, 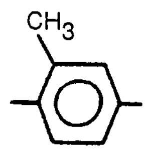, 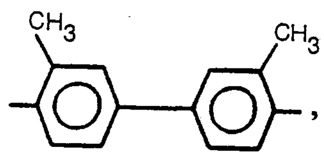, 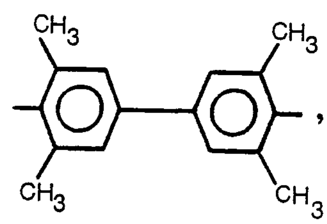,

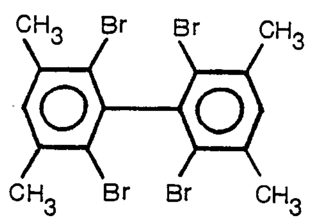 and 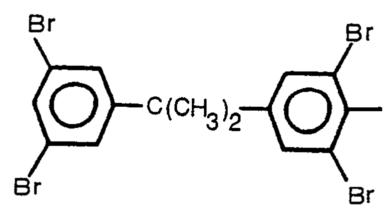

and (2) divalent organic radicals of the general formula

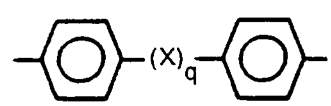

where X is selected from divalent radicals of the formulas

$-C_yH_{2y}-$, 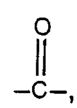, 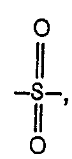, —O— and —S—

where q is 0 or 1, y is a whole number from 1 to about 5, and R is a divalent organic radical selected from (a) aromatic hydrocarbon radicals having from 6 to about 20 carbon atoms and halogenated derivatives thereof, (b) alkylene radicals and cycloalkylene radicals having from 2 to about 20 carbon atoms, $C_{(2-8)}$ alkylene terminated polydiorganosiloxanes, and (c) divalent radicals of the formula

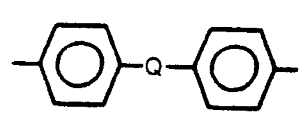

where Q is selected from

$$-O-,\quad -\overset{\overset{\displaystyle O}{\|}}{C}-,\quad -\underset{\underset{\displaystyle O}{\|}}{\overset{\overset{\displaystyle O}{\|}}{S}}-,\quad -S-,\quad \text{and}\quad -C_xH_{2x}-$$

where x is a whole number from 1 to about 5 inclusive, and (B) a copolymer of ethylene vinyl acetate.

The ethylene vinyl acetate copolymers employed in the blends of the present invention can vary with respect of the ethylene to vinyl acetate ratio and the molecular weight of the polymer. Typically, ethylene vinyl acetate copolymers containing from about 10% by weight to about 50% by weight vinyl acetate can be employed in the compositions of this invention. Preferred polymers contain from about 25 wt. % to about 45 wt. % vinyl acetate.

The molecular weight of the ethylene vinyl acetate copolymers employed in these blends is conveniently represented by the so-called melt index (ASTM B-1238). Determination of this index involves measurement of the rate of extrusion of molten resins through a die of a specified length and diameter under prescribed conditions of temperature, load, and piston position in the barrel as the timed measurement is being made. The melt index of the ethylene vinyl acetate copolymer generally ranges from about 0.10 to about 20, preferably from about 0.10 to about 0.50, most preferably about 0.15.

The ethylene vinyl acetate copolymers employed in the blends of this invention are presently commercially available products. For example, such copolymers are sold by Mobay Chemical Corporation, Pittsburg, Pennsylvania under the trademark Levapren 450. Ethylene vinyl acetate is prepared from the copolymerization of ethylene and vinyl acetate and is formed by either free radical or ionic polymerization teachings known to those skilled in the art. *See* "Encyclopedia of Polymer Science and Technology", Vol. 15, pp. 577—677 (1971) for typical methods of preparation of ethylene-vinyl acetate copolymers. Levapren 450 P contains approximately 55% ethylene and 45% vinyl acetate. Levapren 450 P is soluble in most organic solvents, such as tert-butanol, higher ketones and halogenated hydrocarbons, but insoluble in lower alcohols and acetone. Another commercially available ethylene vinyl acetate copolymer is Elvaloy®, produced by E. I. DuPont de Nemours, Wilmington, Delaware, U.S.A. Elvaloy includes compatibility inducants and is sold in various grades, the most desirable of which for the blends of the present invention being ELVAX® 837.

The polyetherimides described above can be obtained by any of the methods well known to those skilled in the art, including the reaction of aromatic bis (ether anhydrides) of the formula

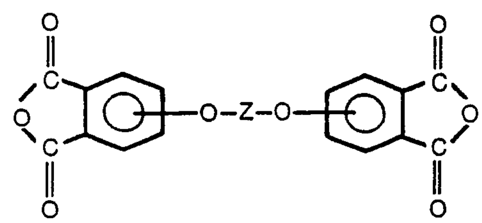

where Z is defined as above, with an organic diamine of the formula

$$H_2N—R—NH_2$$

where R is as defined above. In general, the reactions can be advantageously carried out employing well-known solvents, e.g., o-dichlorobenzene, m-cresol/toluene, and the like, at elevated temperatures from about 100°C. to about 250°C. Alternatively, the polyetherimides can be prepared by melt polymerization of an aromatic bis (ether anhydride) with an organic diamine, as described above, while heating the mixture of the ingredients to an elevated temperature with concurrent mixing. Generally, melt polymerization temperatures between about 200° to about 400°C. and preferably about 230°C. to about 300°C. can be employed. Any order of addition of chain stoppers ordinarily employed in melt polymerization can be employed. The conditions of the reaction and the proportions of ingredients can be varied widely depending on the molecular weight, intrinsic viscosity, and solvent resistance. In general equimolar amounts of organic diamine and bis (ether anhydride) are employed for high molecular weight polyetherimides. However, in certain instances, a slight molar excess (about 1 to 5 mole %) of diamine can be employed, resulting in the production of polyetherimides having terminal amine groups. Generally useful polyetherimides (hereinafter sometimes referred to as PEI) have an intrinsic viscosity greater than 0.2 deciliters per gram, preferably 0.3 to 0.60, or 0.7 deciliters per gram or even higher when measured in m-cresol at 25°C.

Included among the many methods of making the above-identified polyetherimides are those disclosed in U.S. Patents to Heath et al. 3,847,867, Williams 3,847,869, Takekoshi et al. 3,850,885, White 3,852,242 and 3,855,178.

The aromatic bis(ether anhydride)s employed as starting materials for the polyetherimides include, for example,

2,2-bis[4-(2,3-dicarboxyphenoxy)phenyl]-propane dianhydride;
4,4'-bis(2,3-dicarboxyphenoxy)diphenyl ether dianhydride;
1,3-bis(2,3-dicarboxyphenoxy)benzene dianhydride;
4,4'-bis(2,3-dicarboxyphenoxy)diphenyl sulfide dianhydride;
1,4-bis(2,3-dicarboxyphenoxy)benzene dianhydride;
4,4'-bis(2,3-dicarboxyphenoxy)benzophenone dianhydride;
4,4'-bis(2,3-dicarboxyphenoxy)diphenyl sulfone dianhydride; etc.
2,2-bis[4-(3,4-dicarboxyphenoxy)phenyl]propane dianhydride;
4,4'-bis(3,4-dicarboxyphenoxy)diphenyl ether dianhydride;
4,4'-bis(3,4-dicarboxyphenoxy)diphenyl sulfide dianhydride;
1,3-bis(3,4-dicarboxyphenoxy)benzene dianhydride;
1,4-bis(3,4-dicarboxyphenoxy)benzene dianhydride;
4,4'-bis(3,4-dicarboxyphenoxy)benzophenone dianhydride;
4-(2,3-dicarboxyphenoxy)-4'-(3,4-dicarboxyphenoxy)diphenyl-2,2-propane dianhydride;
and mixtures of such dianhydrides.

Additionally, aromatic bis(ether anhydride)s are shown by Koton, M. M.; Florinski, F. S.; Bessonov, M. I.; Rudakov, A. P. (Institute of Heteroorganic Compounds, Academy of Sciences, U.S.S.R.), U.S.S.R. 257,010, Nov. 11, 1969, Appl. May 3, 1967. In addition, dianhydrides are shown by M. M. Koton, F. S. Florinski, *Zh. Org. Khin., 4* (5), 774 (1968).

The organic diamines employed in preparing the polyetherimides include, for example,
m-phenylenediamine,
p-phenylenediamine,
4-4'-diaminodiphenylpropane,
4-4'-diaminodiphenylmethane,
benzidine,
4,4'-diaminodiphenyl sulfide,
4,4'-diaminodiphenyl sulfone,
4,4'-diaminodiphenyl ether,
1,5-diaminophthalene,
3,3'-dimethylbenzidine,
3,3'-dimethoxybenzidine,
2,4-bis(β-amino-t-butyl)toluene,
bis(p-β-amino-t-butylphenyl)ether,
bis(p-β-methyl-o-aminopentyl)benzone,
1,3-diamino-4-isopropylbenzene,
1,2-bis(3-aminopropoxy)ethane,
m-xylylenediamine,
p-xylylenediamine,
2,4-diaminotoluene,
2,6-diaminotoluene,
bis(4-aminocyclohexyl)methane,
3-methylheptamethylenediamine,
4,4-dimethylheptamethylenediamine,
2,11-dodecanediamine,
2,2-dimethylpropylenediamine,
octamethylenediamine,
3-methoxyhexamethylenediamine,
2,5-dimethylhexamethylenediamine,
2,5-dimethylheptamethylenediamine,
3-methylheptamethylenediamine,
5-methylnonamethylenediamine,
1,4-cyclohexanediamine,
1,12-octadecanediamine,
bis(3-aminopropyl)sulfide,
N-methyl-bis(3-aminopropyl)amine,
hexamethylenediamine,
heptamethylenediamine,
nonamethylenediamine,
decamethylenediamine,
bis(3-aminopropyl)tetramethyldisiloxane,
bis(4-aminobutyl)tetramethyldisiloxane,
and mixtures of such diamines.

The polyetherimides and ethylene vinyl acetate copolymers are compatible with each other within the ranges of proportions contemplated in the present invention. Generally, the blends of this invention employ from about 3 wt. % to about 15 wt. % ethylene vinyl acetate copolymer, the balance being

essentially polyetherimide. In preferred blends, the concentration of ethylene vinyl acetate copolymer ranges from about 5% to about 12% by wt., preferably about 10% by wt. Blends within these proportions have been found to have improved impact strengths, as compared to unmodified polyetherimides.

The compatibility of polyetherimides and ethylene vinyl acetate copolymers has been employed advantageously for the preparation of laminates of these polymers. Compression molded films of ethylene vinyl acetate and polyetherimides exhibit high peel strengths. These laminates can be employed in any of a variety of applications where a relatively soft, rubber surface is desired on a hard, rigid plastic. Examples of such applications include fittings and the like to be sealed into an orifice, or doors or windows for which tight seals are desirable, e.g., microwave oven doors. The following examples further illustrate the present invention, but are not intended to be limiting.

Example I

10 parts of polyetherimide of the above formula, wherein Z represents a group of the formula

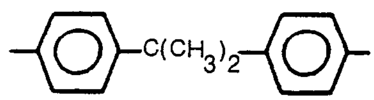

,

the phthalic anhydride groups are substituted in the 4,4'- positions, and R represents m-phenylene were mixed with 1 part of ethylene vinyl acetate copolymer having a melt index of 0.15. These polymers were mixed by melting the polyetherimide in a blade type mixer and then lowering the temperature to just above the glass transition temperature. At this point, the ethylene vinyl acetate copolymer was added and the material was blended. The resulting blend was then compression molded into 3.175 mm (⅛ inch) sheets.s. These sheets were cut into bars measuring 63.5 mm by 12.7 mm (2½ inches by ½ inch), which were notched and tested by the standard notched Izod impact test. Unmodified polyetherimide of the same formula was also subjected to this test as a control. The notched Izod test was conducted substantially as described in ASTM test D256. The impact strength of the ethylene vinyl acetate copolymer/polyetherimide blend was determined to be 0.762 J/m (1.4 foot-pounds per inch), whereas the impact strength of the unmodified polyetherimide was determined to be 0.326 J/m (0.6 foot-pounds per inch).

The glass transition temperatures (Tg) of the unmodified polyetherimide and the ethylene vinyl acetate/polyetherimide blend were measured to be 214°C. in both samples. The single glass transition temperature is an indication of compatibility between the two polymers.

Example II

Film castings of blends of polyetherimide and ethylene vinyl acetate copolymers were prepared by preparing 10% solutions of each of the polymers in chloroform and by mixing them to form the desired ratio. A 22:1 blend of polyetherimide to ethylene vinyl acetate was prepared and a film was cast by spreading the solution on a Mylar® sheet followed by air evaporation of the solvent. The resulting film was removed from the Mylar and was inspected. The film was transparent, evidencing compatibility of the two polymers. A second film was cast from a chloroform solution of 6.2:1 blend of polyetherimide to ethylene vinyl acetate copolymer (Levaperen 450 N), which also was transparent and demonstrated compatibility of those two polymers.

Example III

Sheets of polyetherimide as described in Example I were cast and compression molded with sheets of ethylene vinyl acetate copolymer. Approximately 50 g of each resin was compression molded between flat plates to form sheets 10 to 20 mils thick. Sheets of the two polymers were then compression molded together leaving one end unlaminated. The force required to peel apart the resulting laminate was measured to be between 5 and 10 lbs per inch, demonstrating good cohesion and compatibility between the polymers.

**Claims**

1. A polyetherimide-polyester blend comprising: (A) from about 85 wt. % to about 97 wt. % of a polyetherimide of the formula:

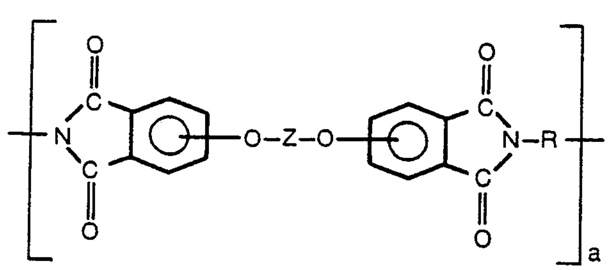

where a represents a whole number in excess of 1, —O—Z—O— is in the 3,3'-, 3,4'-, 4,3'- or 4,4'- positions and Z is selected from (1)

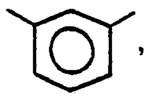 , 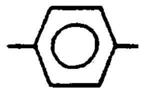 , 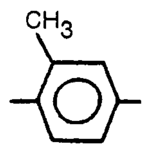 , 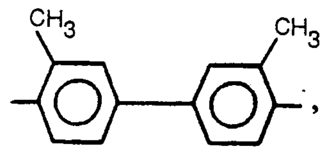 , 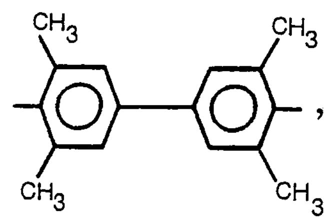 ,

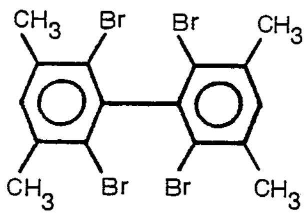 and 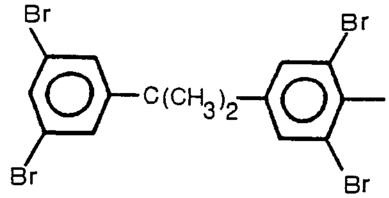

and (2) divalent organic radicals of the general formula

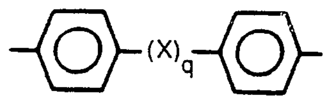

where X is selected from divalent radicals of the formula:

$$-C_yH_{2y}-,\quad -\overset{\overset{\displaystyle O}{\|}}{C}-,\quad -\overset{\overset{\displaystyle O}{\|}}{\underset{\underset{\displaystyle O}{\|}}{S}}-,\quad -O- \quad \text{and} \quad -S-$$

where q is 0 or 1, y is a whole number from 1 to 5, R is a divalent organic radical selected from (a) aromatic hydrocarbon radicals having from 6—20 carbon atoms and halogenated derivatives thereof, (b) alkylene radicals and cycloalkylene radicals having from 2 to 20 carbon atoms, $(C_{(2-8)}$ alkylene terminated polydiorganosiloxane, and (c) divalent radicals of the formula:

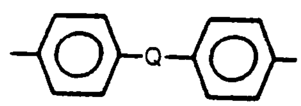

where Q is a member selected from

$$-O-,\quad -\overset{\overset{\displaystyle O}{\|}}{C}-,\quad -\overset{\overset{\displaystyle O}{\|}}{\underset{\underset{\displaystyle O}{\|}}{S}}-,\quad -S-,\quad \text{and} \quad -C_xH_{2x}-$$

and x is a whole number from 1 to 5 inclusive, and (B) about 3 wt. % to about 15 wt. % of an ethylene vinyl acetate copolymer.

2. The blend of claim 1 comprising from about 88 wt. % to about 95 wt. % polyetherimide and from about 5 wt. % to about 12 wt. % ethylene vinyl acetate copolymer.

3. The blend of claim 1 comprising about 90 wt. % polyetherimide and about 10 wt. % ethylene vinyl acetate copolymer.

4. The blend of claim 1, 2 or 3 wherein, in the polyetherimide, Z is a group of the formula

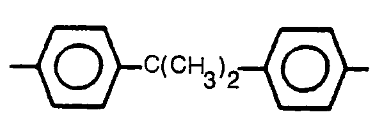

and the ethylene vinyl acetate copolymer contains from about 25 wt. % to about 50 wt. % vinyl acetate.

5. The blend of claim 4 wherein R is m-phenylene.

6. The blend of claim 1, 2 or 3, wherein the ethylene vinyl acetate copolymer contains from about 15 wt. % to about 55 wt. % vinyl acetate and has a melt index from about 0.1 to about 20.

7. The blend of claim 4, wherein the ethylene vinyl acetate copolymer and has a melt index from about 0.10 to about 4.0.

8. A laminate of a polyetherimide as defined in claim 1 with an ethylene vinyl acetate copolymer, comprising sheets of the two polymers compression molded together.

9. The laminate of claim 8, wherein, in the polyetherimide, Z is a group of the formula

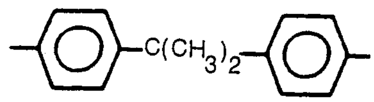

10. The laminate of claim 8 or 9, wherein the ethylene vinyl acetate copolymer contains from about 15 wt. % to about 55 wt. % vinyl acetate and has a melt index of from about 0.1 to about 20.

11. The laminate of claim 10, wherein the ethylene vinyl acetate copolymer contains from about 25 wt. % to about 50 wt. % vinyl acetate and has a melt index of from about 0.10 to about 4.0.

**Patentansprüche**

1. Polyätherimid-Polyestermischung enthaltend: (A) etwa 85 Gew.-% bis etwa 97 Gew.-% eines Polyätherimids der Formel

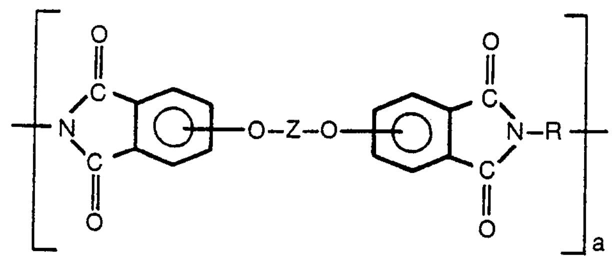

worin a eine ganze Zahl größer als 1 darstellt, die Gruppe —O—Z—O— in den 3,3'-, 3,4'-, 4,3'- oder 4,4'-Stellungen angeordnet ist und Z ausgewählt ist aus (1)

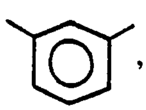 , 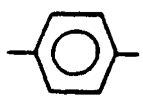 , 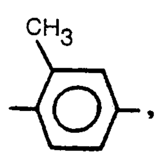 , 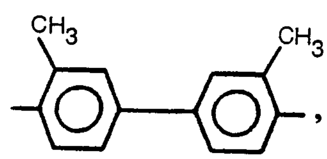 , 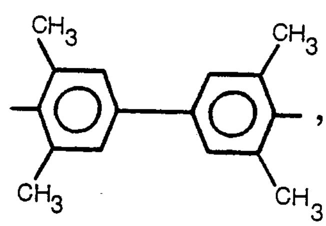 ,

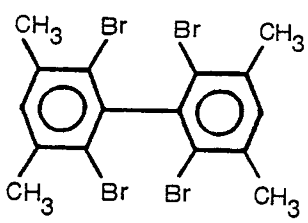 und 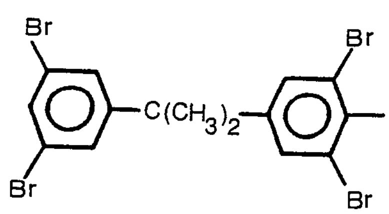

und (2) zweiwertigen organischen Resten der allgemeinen Formel

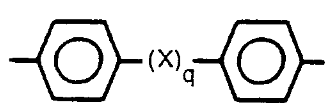

worin X ausgewählt ist aus zweiwertigen Resten der Formel

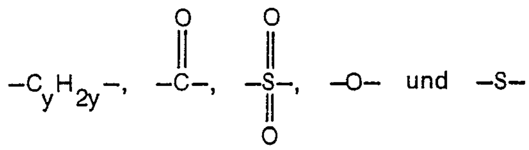

worin q gleich 0 oder 1 ist, y eine ganze Zahl von 1 bis 5 ist, R ein zweiwertiger organischer Rest ist ausgewählt aus (a) aromatischen Kohlenwasserstoffresten mit 6 bis 20 Kohlenstoffatomen und halogenierten Derivaten derselben, (b) Alkylenresten und Cycloalkylenresten mit 2 bis etwa 20 Kohlenstoffatomen, Polydiorganosiloxan mit $C_{(2-8)}$-Alkylenendgruppen und (c) zweiwertigen Resten der Formel

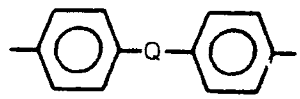

worin Q ein Glied ist ausgewählt aus

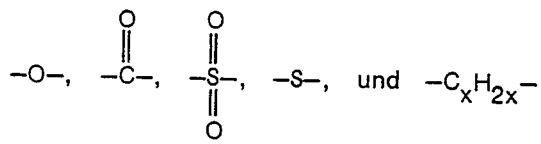

und x eine ganze Zahl von 1 bis 5 einschließlich ist und (B) etwa 3 Gew.-% bis etwa 15 Gew.-% eines Äthylenvinylacetatcopolymeren.

2. Mischung nach Anspruch 1 enthaltend etwa 88 Gew.-% bis etwa 95 Gew.-% Polyätherimid und etwa 5 Gew.-% bis etwa 12 Gew.-% Äthylenvinylacetatcopolymer.

3. Mischung nach Anspruch 1 enthaltend etwa 90 Gew.-% Polyätherimid und etwa 10 Gew.-% Äthylenvinylacetatcopolymer.

4. Mischung nach Anspruch 1, 2 oder 3, worin in dem Polyätherimid Z eine Gruppe der Formel

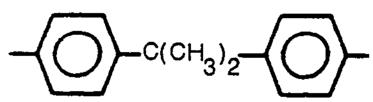

ist und das Äthylenvinylacetatcopolymer etwa 25 Gew.-% bis etwa 50 Gew.-% Vinylacetat enthält.

5. Mischung nach Anspruch 4, worin R gleich m-Phenylen ist.

6. Mischung nach Anspruch 1, 2 oder 3, worin das Äthylenvinylacetatcopolymer von etwa 15 Gew.-% bis etwa 55 Gew.-% Vinylacetat enthält und einen Schmelzindex von etwa 0,1 bis etwa 20 aufweist.

7. Mischung nach Anspruch 4, worin das Äthylenvinylacetatcopolymer einen Schmelzindex von etwa 0,10 bis etwa 4,0 aufweist.

8. Laminat aus einem Polyätherimid nach Anspruch 1 mit einem Äthylenvinylacetatcopolymer enthaltend Lagen aus den zwei Polymeren, die unter Druck zusammengeformt sind.

9. Laminat nach Anspruch 8, worin in dem Polyätherimid Z eine Gruppe der Formel

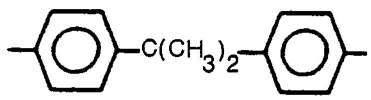

ist.

10. Laminat nach den Ansprüchen 8 oder 9, worin das Äthylenvinylacetatcopolymer etwa 15 Gew.-% bis etwa 55 Gew.-% Vinylacetat enthält und einen Schmelzflußindex von etwa 0,1 bis etwa 20 aufweist.

11. Laminat nach Anspruch 10, worin das Äthylenvinylacetatcopolymer von 25 Gew.-% bis etwa 50 Gew.-% Vinylacetat enthält und einen Schmelzflußindex von etwa 0,10 bis etwa 4,0 aufweist.

**Revendications**

1. Mélange de polyétherimide-polyester comprenant: (A) d'environ 85% en poids à environ 97% en poids d'un polyétherimide de formule

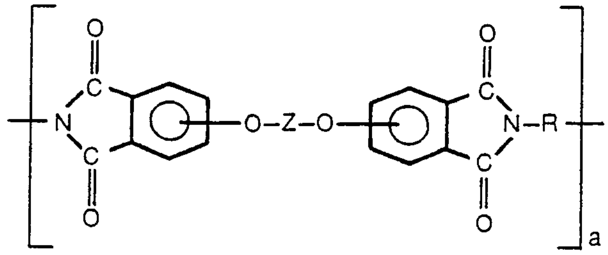

dans laquelle a représente un nombre entier supérier à 1, le groupe —O—Z—O— est dans les positions 3,3'-, 3,4'-, 4,3'- ou 4,4'- et Z est choisi parmi (1)

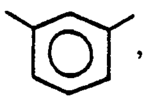 , 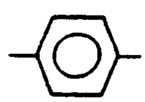 , 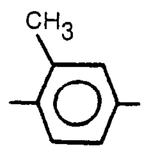 , 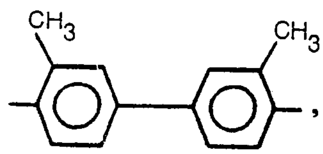 , 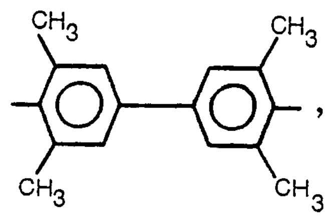 ,

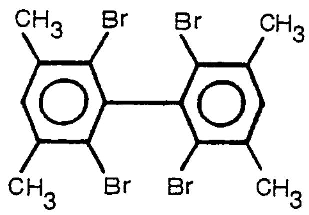 et 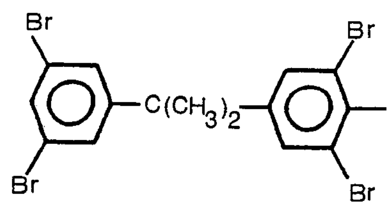

et (2) des radicaux organiques divalents de formule générale

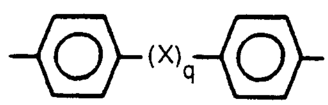

dans laquelle X est choisi parmi les radicaux divalents de formules

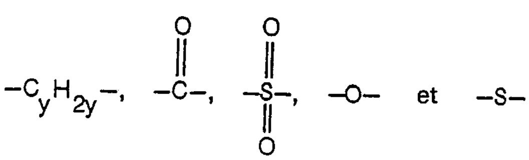

où q vaut 0 ou 1, y et nombre entier de 1 à environ 5 et R est un radical organique divalent choisi parmi (a) les radicaux hydrocarbonés aromatiques ayant de 6 à 20 atomes de carbone et leurs dérivés halogénés, (b) les radicaux alkylène et les radicaux cycloalkylène ayant de 2 à environ 20 atomes de carbone, les polydiorganosiloxanes à terminaison alkylène en $C_{2-8}$ et (c) les radicaux divalents de formule

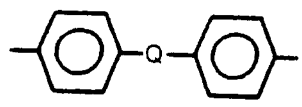

dans laquelle Q est choisi parmi

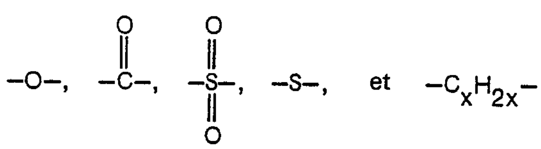

où x est un nombre entier de 1 à 5 inclusivement et (B) environ 3% en poids à environ 15% en poids d'un copolymère d'éthylène-acétate de vinyle.

2. Mélange selon la revendication 1 comprenant d'environ 88% en poids à environ 95% en poids de polyétherimide et d'environ 5% en poids à environ 12% en poids de copolymère d'éthylène-acétate dee vinyle.

3. Mélange selon la revendication 1 comprenant environ 90% en poids de polyétherimide et environ 10% en poids de copolymère d'éthylène-acétate de vinyle.

4. Mélange selon l'une quelconque des revendications 1, 2 ou 3 dans lequel, dans le polyétherimide, Z est un groupe de formule

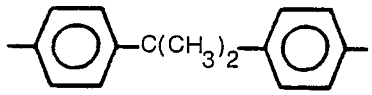

et le copolymère d'éthylène-acétate de vinyle contient d'environ 25% en poids à environ 50% en poids d'acétate de vinyle.

5. Mélange selon la revendication 4, dans lequel R est un m-phénylène.

6. Mélange selon l'une quelconque des revendications 1, 2 ou 3, dans lequel le copolymère d'éthylène-acétate de vinyle contient d'environ 15% en poids à environ 55% en poids d'acétate de vinyle et a un indice de fluidité d'environ 0,1 à environ 20.

7. Mélange selon la revendication 4, dans lequel le copolymère d'éthylène-acétate de vinyle a un indice de fluidité d'environ 0,10 à environ 4,0.

8. Stratifié fait d'un polyétherimide comme défini dans la revendication 1 avec un copolymère d'éthylène-acétate de vinyle, comprenant des feuilles des deux polymères moulés ensemble par compression.

9. Stratifié selon la revendication 8, dans lequel, dans le polyétherimide, Z est un groupe de formule

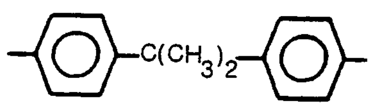

10. Stratifié selon la revendication 8 ou 9, dans lequel le copolymère d'éthylène-acétate de vinyle contient d'environ 15% en poids à environ 55% en poids d'acétate de vinyle et a un indice de fluidité d'environ 0,1 à environ 20.

11. Stratifié selon la revendication 10, dans lequel le copolymère d'éthylène-acétate de vinyle contient d'environ 25% en poids à environ 50% en poids d'acétate de vinyle et a un indice de fluidité d'environ 0,10 à environ 4,0.